**Europäisches Patentamt**

**European Patent Office**

**Office européen des brevets**

(19)

(11) Veröffentlichungsnummer: **0 101 585**
A2

# EUROPÄISCHE PATENTANMELDUNG

(12)

(21) Anmeldenummer: 83107681.5

(22) Anmeldetag: 04.08.83

(51) Int. Cl.³: **C 08 G 63/54**, C 08 G 63/76, C 08 G 63/68

(30) Priorität: 20.08.82 DE 3230924

(43) Veröffentlichungstag der Anmeldung: 29.02.84 Patentblatt 84/9

(84) Benannte Vertragsstaaten: DE FR GB IT NL SE

(71) Anmelder: BASF Aktiengesellschaft, Carl-Bosch-Strasse 38, D-6700 Ludwigshafen (DE)

(72) Erfinder: Demmler, Kurt, Dr., Irisstrasse 8, D-6700 Ludwigshafen (DE)

(54) Verfahren zur Herstellung von ungesättigten Polyesterharzen.

(57) Die Erfindung betrifft ein Verfahren zur Herstellung von ungesättigten Polyesterharzen mit verbesserter thermischer Stabilität. Dabei werden ethylenisch ungesättigte Dicarbonsäuren bzw. deren Anhydride mit Diolen und N–Hydroxialkylimiden einfach ungesättigter cycloaliphatischer 1,2-Dicarbonsäuren verestert, der erhaltene ungesättigte Polyester wird mit Dicyclopentadien umgesetzt, weiterkondensiert und schließlich in Vinylmonomeren aufgelöst.

EP 0 101 585 A2

BASF Aktiengesellschaft                    O.Z.0050/36107

# Verfahren zur Herstellung von ungesättigten Polyesterharzen

Es ist bekannt, ungesättigte Polyesterharze mit Dicyclopentadien zu modifizieren, um auf diese Weise nach der Aushärtung thermisch beständige Formkörper mit erhöhter Wärmeformbeständigkeit zu erhalten. Je nach Reaktionstemperatur und Säurezahl des Polyesters wird das Dicyclopentadien entweder endständig an eine Carboxyl- bzw. Hydroxylgruppe addiert, oder aber nach Spaltung zu Cyclopentadien an die copolymerisierbare Doppelbindung der Ethylendicarbonsäureester-Strukturen addiert, wobei sich Endomethylentetrahydrophthalsäureester-Strukturen bilden.

Es wurde nun gefunden, daß sich Formkörper mit noch besserer thermischer Stabilität und Wärmeformbeständigkeit herstellen lassen, wenn man solche ungesättigte Polyester mit Dicyclopentadien oder auch anderen 1,3-Diolefinen modifiziert, die als Alkoholkomponente N-Hydroxialkylimide einfach ungesättigter, gegebenenfalls substituierter cycloaliphatischer 1,2-Dicarbonsäuren enthalten.

Gegenstand der Erfindung ist demzufolge ein Verfahren zur Herstellung von ungesättigten Polyesterharzen, wobei man

a) ethylenisch ungesättigte Dicarbonsäuren oder deren Anhydride A 1 sowie gegebenenfalls gesättigte Carbonsäuren oder deren Anhydride A 2 mit Diolen B 1 sowie gegebenenfalls Polyolen B 2 bis zu einer Säurezahl von weniger als 150 verestert,

b) den erhaltenen ungesättigten Polyester bei Temperaturen oberhalb von 160°C mit 0,1 bis 0,4 Mol (pro Mol ungesättigter Dicarbonsäure A 1) an gegebenenfalls substituiertem Dicyclopentadien C 1 oder 0,2 bis 0,8 Mol (pro Mol ungesättigter Dicarbonsäure

Dd/P

A 1) an gegebenenfalls substituierten aliphatischen oder cycloaliphatischen 1,3-Dienen C 2 umsetzt, die Polykondensation weiterführt, und

c) den erhaltenen modifizierten ungesättigten Polyester in Vinylmonomeren D auflöst, wobei die Veresterung in Gegenwart von N-Hydroxialkylimiden einfach ungesättigter, gegebenenfalls substituierter cycloalipahtischer 1,2-Dicarbonsäuren B 3 durchgeführt wird.

Als ethylenisch ungesättigtte Dicarbonsäuren oder deren Anhydride A 2 kommen insbesondere Maleinsäure, Fumarsäure, Itaconsäure und Tetrahydrophthalsäure sowie deren Anhydride in Frage, wobei Maleinsäureanhydrid bevorzugt ist. Daneben können bis zu 50 Mol%, bezogen auf A 1, anderer Carbonsäuren oder Anhydride A 2, wie Adipinsäure, o-Phthalsäureanhydrid, Trimellithsäure oder Pyromellithsäure mitverwendet werden.

Geeignete Diole B 1 sind z.B. Propylenglykol-1,2, Ethylenglykol, Diethylenglykol, Butandiol-1,3, Butandiol-1,4, Neopentylglykol sowie hydriertes Bisphenol A. Als Polyole B 2 kommen z.B. Trimethylolpropan, Glyzerin und Pentaerythrit in Frage.

Erfindungsgemäß wird die Veresterung der Komponenten A und B in Gegenwart von N-Hydroxialkylimiden einfach ungesättigter, gegebenenfalls substituierter cycloaliphatischer 1,2-Dicarbonsäuren B 3 durchgeführt. Diese werden hergestellt durch Umsetzung von Hydroxialkylaminen, z.B. Ethanolamin mit Dicarbonsäureanhydriden, wie z.B. Tetrahydrophthalsäureanhydrid, Endomethylentetrahydrophthalsäureanhydrid, Methyltetrahydrophthalsäureanhydrid, Methylendomethylentetrahydrophthalsäureanhydrid oder Dimethylendomethylentetrahydrophthalsäureanhydrid. Die Komponente B 3 wird vorzugsweise in Mengen von 10 bis 70 Mol%, bezogen auf die Summe B 1 - B 2- B 3 eingesetzt.

Die Summe der Hydroxylgruppen von B 1, B 2 und B 3 sollte das 0,9 bis 1,2-fache der Summe der Carboxylgruppen der Komponente A betragen. Die Veresterung wird unter üblichen Bedingungen, vorzugsweise bei Temperaturen zwischen 160 und 220°C in Gegenwart üblicher Zusatzstoffe, wie z.B. Inhibitoren, durchgeführt. Die Säurezahl des so hergestellten ungesättigten Polyesters muß weniger als 150 betragen, sie sollte vorzugsweise zwischen 20 und 100 liegen.

Der erhaltene ungesättigte Polyester wird anschließend modifiziert, indem man ihn mit 0,1 bis 0,4 Mol (pro Mol ungesättigter Dicarbonsäure A 1) an gegebenenfalls substituiertem Dicyclopentadien C 1 oder 0,2 bis 0,8 Mol (pro Mol ungesättigter Dicarbonsäure A 1) an gegebenenfalls substituierten aliphatischen oder cycloaliphatischen 1,3-Dienen C 2 umsetzt.

Als Komponente C 1 kommen neben Dicyclopentadien auch Methyldicyclopentadien oder Dimethyldicyclopentadien in Frage, als Komponente C 2 u.a. Cyclopentadien, Butadien oder Isopren.

Diese Modifizierung des ungesättigten Polyesters erfolgt bei Temperaturen oberhalb von 160°C, vorzugsweise zwischen 180 und 200°C. Bei dieser Temperatur wird solange belassen, bis sich der ungesättigte Kohlenwasserstoff eventuell nach einer Retro-Diels-Alder-Spaltung durch Addition an die Doppelbindung der Ethylendicarbonsäureester-Struktur unter Bildung von (Endomethylen)Tetrahydrophthalsäureester--Strukturen umgesetzt hat. Nach Weiterkondensation des ungesättigten Polyesters, wobei die Säurezahl auf einen

Wert unter 70, vorzugsweise zwischen 10 und 50 fällt, wird auf Temperaturen zwischen 100 und 120°C abgekühlt und der ungesättigte Polyester nach Zusatz üblicher Inhibitoren in einem Vinylmonomeren D gelöst, wobei vorzugsweise 30 bis 100 Gewichtsteile Monomer auf 100 Gewichtsteile ungesättigter Polyester verwendet werden. Geeignete Vinylmonomere D sind z.B. Styrol, Methylstyrol, Chlorstyrol, Divinylbenzol, Diallylphthalat, Methylmethacrylat sowie deren Gemische. Vorher kann – falls erwünscht – eine Wasserdampfdestilliation erforderlich sein, um letzte Spuren übelriechender Verunreinigungen zu entfernen.

Aus den erfindungsgemäß hergestellten ungesättigten Polyesterharzen können durch Härtung nach üblichen Verfahren Formstoffe hergestellt werden, die sich durch ausgezeichnete Verseifungsbeständigkeit, geringe Wasseraufnahme, hohe thermische Stabilität und Wärmeformbeständigkeit auszeichnen.

Herstellung der Polyesterharze

1. 294 g Maleinsäureanhydrid, 436 g N-Hydroxiethyltetrahydrophthalsäureimid, 74 g Ethylenglykol, 54 g Pentaerythrit und 85 mg Toluhydrochinon werden in einem 1-1-Vierhalsrundkolben mit Rührer, Thermometer und Übergang mit absteigendem Kühler in einem Stickstoffstrom innerhalb 2 h bei 190°C auf eine Säurezahl von 57 verestert. Nach Auswechseln des Übergangs durch einen Rückflußkühler werden 66 g Dicyclopentadien langsam zugegeben. Nach Aufhöhren des Rückflusses wird der Rückflußkühler wieder durch den Übergang ersetzt und das Reaktionsgemisch bei 190°C bis zu einer Säurezahl von 25,3 weiterkondensiert. Erhalten werden 850 g eines gelben, klaren, harten Harzes (0,207 Äquivalente Doppelbindungen von Ethylendicarbonesterstrukturen/100 g, Verseifungszahl 256 entsprechend 0,47 Äquivalente Dicarbonester- bzw. -imidstruktur/100 g). 700 g dieses ungesättigten Polyesters werden nach Zugabe von 52 mg Toluhydrochinon in 345 g Styrol bei einer Temperatur unterhalb 120°C gelöst.

2. 294 g Maleinsäureanhydrid, 87 g N-Hydroxiethyltetrahydrophthalimid, 81 g Ethylenglykol, 135 g Neopentylglykol und 50 mg Toluhydrochinon werden wie im Beispiel 1 bis Säurezahl 61 verestert. Dann wird analog 66 g Dicyclopentadien zulaufen lassen und bis zu einer Säurezahl von 21,9 gehalten. Erhalten werden 604 g eines gelben, klaren, harten Harzes (0,331 Äquivalente Doppelbindungen von Ethylendicarbonesterstrukturen/100 g, Verseifungszahl 561 entsprechend 0,50 Äquivalente Dicarbonester- bzw. -imidstruktur/100 g). 500 g dieses ungesättigten Polyesters werden nach Zugabe von 34 mg Toluhydrochinon in 246 g Styrol gelöst.

3. 441 g Maleinsäureanhydrid, 384 g N-Hydroxiethylendomethylentetrahydrophthalsäureimid, 242 g Ethylenglykol und 100 mg Toluhydrochinon werden in einem 2 l-Vierhalsrundkolben wie im Beispiel 1 bis Säurezahl 59 verestert. Dann wird 99 g Dicyclopentadien zulaufen lassen und bis zu einer Säurezahl von 15,5 gehalten. Erhalten werden 1 600 g eines braunen, klaren, harten Harzes (0,256 Äquivalente Doppelbindungen von Ethylendicarbonesterstrukturen/100 g, Verseifungszahl 540 entsprechend 0,482 Äquivalente Dicarbonester- bzw. -imidstruktur/100 g). 1 000 g dieses ungesättigten Polyesters werden nach Zugabe von 55 mg Toluhydrochinon in 493 g Styrol gelöst.

4. 147 g Maleinsäureanhydrid, 238 g N-Hydroxiethyltetrahydrophthalimid, 43 g Ethylenglykol, 27 g Trimethylolpropan und 50 mg Toluhydrochinon werden wie in Beispiel 1 bis Säurezahl 64 verestert. Dann wird 33 g
Dicyclopentadien zulaufen lassen und bis zu einer
Säurezahl von 16 gehalten. Erhalten werden 445 g eines
braunen, klaren, harten Harzes (0,173 Äquivalente
Doppelbindungen von Ethylendicarbonesterstrukturen/100 g, Verseifungszahl 506 entsprechend 0,452
Äquivalente Dicarbonester- bzw. -imidstruktur/100 g).
400 g dieses ungesättigten Polyesters werden nach
Zugabe von 15 mg Toluhydrochinon in 197 g Styrol
gelöst.

5. 98 g Maleinsäureanhydrid, 238 g N-Hydroxiethyltetrahydrophthalimid, 43 g Ethylenglykol, 27 g Trimethylolpropan, 77 g Tetrahydrophthalsäureanhydrid und 50 mg
Toluhydrochinon werden in einem Stickstoffstrom bis zu
einer Säurezahl von 23,4 verestert. Erhalten werden
428 g eines braunen, klaren, harten Harzes (0,175
Äquivalente Doppelbindungen von Ethylendicarbonesterstrukturen/100 g, Verseifungszahl 508 entsprechend
0,453 Äquivalente Dicarbonester- bzw. -imidstruktur/100 g). 300 g dieses ungesättigten Polyesters
werden nach Zugabe von 10 mg Toluhydrochinon in 148 g
Styrol gelöst.

6. Polyesterharz ohne Komponente B 3 784 g Maleinsäureanhydrid, 699 g Propylenglykol und
100 mg Hydrochinon werden wie in Beispiel 1 bis Säurezahl 82 verestert. Dann wird 264 g Dicyclopentadien
zulaufen lassen und bis zu einer Säurezahl von 29
gehalten. Erhalten werden 1555 g eines gelben, klaren,
weichen Harzes (0,198 Äquivalente Doppelbindungen von Ethylendicarbonesterstrukturen/100 g, Verseifungszahl 549 entsprechend 0,49 Äquivalente Dicarbonester- bzw. -imidstruktur/100 g). 1400 g dieses ungesättigten Polyesters werden nach Zugabe von 125 mg Hydrochinon in 754 g Styrol gelöst.

Prüfung der Eigenschaften

Den Polyesterharzen wurde 2 % Methylethylketonperoxid und 0,002 % Cobaltoktoat (als 1%ige styrolische Lösung) zugesetzt. Daraus wurden Rundstäbe mit einem Durchmesser von 1 cm und einer Länge von 4 cm gegossen. Diese wurden 24 h bei Raumtemperatur und anschließend 24 h bei 120°C gehärtet.

Die thermische Stabilität wurde durch Messung des Gewichtsverlustes nach 168-stündiger Lagerung eines Rundstabes im Trockenschrank bei 220°C bestimmt.

Die Wasseraufnahme wurde durch Messung der Gewichtszunahme nach 8-stündigem Kochen eines Rundstabes in destilliertem Wasser bestimmt. Die Verseifungsbeständigkeit wurde durch Messung der Gewichtsänderung nach 8-stündigem Kochen in 10%iger Natronlauge bestimmt.

0101585

Ergebnisse

| Harz | Viskosität (23°C) mPas | thermische Stabilität % | Wasser- aufnahme % | Verseifungs- best. % |
|------|------------------------|-------------------------|--------------------|----------------------|
| 1 | 2 235 | −2,1 | +1,3 | +24,4 |
| 2 | 1 892 | −4,1 | +0,8 | +2,6 |
| 3 | 700 | −2,0 | +1,4 | +13,9 |
| 4 | 644 | −3,8 | +1,7 | +6,4 |
| 5 | 317 | −4,3 | +1,9 | +3,9 |
| 6 | 493 | −12,9 | +1,4 | +9,7 |

Patentanspruch

Verfahren zur Herstellung von ungesättigten Polyesterharzen, wobei man

a)  ethylenisch ungesättigte Dicarbonsäuren oder deren
    Anhydride A 1 sowie gegebenenfalls gesättigte Carbonsäuren oder deren Anhydride A 2 mit Diolen B 1 sowie
    gegebenenfalls Polyolen B 2 bis zu einer Säurezahl von
    weniger als 150 verestert,

b)  den erhaltenen ungesättigten Polyester bei Temperaturen oberhalb von 160°C mit 0,1 bis 0,4 Mol (pro Mol
    ungesättigter Dicarbonsäure A 1) an gegebenenfalls
    substituiertem Dicyclopentadien C 1 oder 0,2 bis
    0,8 Mol (pro Mol ungesättigter Dicarbonsäure A 1) an
    gegebenenfalls substituierten aliphatischen oder
    cycloaliphatischen 1,3-Dienen C 2 umsetzt und die
    Polykondensation weiterführt, und

c)  den erhaltenen modifizierten ungesättigten Polyester
    in Vinylmonomeren D auflöst, dadurch gekennzeichnet,
    daß die Veresterung in Gegenwart von N-Hydroxialkyl-
    imiden einfach ungesättigter, gegebenenfalls substi-
    tuierter cycloaliphatischer 1,2-Dicarbonsäuren B 3
    durchgeführt wird.